# EUROPEAN PATENT APPLICATION

(11) **EP 3 594 783 A1**
(43) Date of publication of application: **15.01.2020**
(21) Application number: 18764873.8
(22) Date of filing: 21.02.2018
(51) Int. Cl.: G06F 3/01

(54) **INFORMATION PROCESSING DEVICE, INFORMATION PROCESSING METHOD AND PROGRAM**

(30) Priority: 07.03.2017 JP 2017042681
(71) Applicant: Sony Corporation, Tokyo 108-0075 (JP)
(72) Inventor: SATO, Naoyuki, Tokyo 108-0075 (JP); KUDO, Yusuke, Tokyo 108-0075 (JP); ARAI, Fujio, Tokyo 108-0075 (JP); TORII, Kuniaki, Tokyo 108-0075 (JP)
(74) Representative: MFG Patentanwälte Meyer-Wildhagen Meggle-Freund Gerhard PartG mbB
(86) International application number: PCT/JP2018/006113
(87) International publication number: WO 2018/163811

(57) **Abstract**

The present technology relates to an information processing device, an information processing method, and a program to enable transmission of information that is from a different device.

An acquisition unit that acquires information from a different device, a detection unit that detects whether or not a user pays attention to the different device, and a transmission control unit that transmits the information to the user when it is detected by the detection unit that the user pays attention to the different device are included. The transmission control unit does not perform transmission of the information until the detection unit detects that the user pays attention to the different device. The present technology can be applied, for example, to an agent device that controls a device installed in a house or that presents appropriate information to the user.

## Description

### TECHNICAL FIELD

The present technology relates to an information processing device, an information processing method, and a program and relates, for example, to an information processing device, information processing method, and program suitable for being used when information desired to be transmitted is securely transmitted to a user.

### BACKGROUND ART

There is a robot that copies an animal, a human-shaped robot, or the like. Such a robot communicates with a human (user) or heals a human. A proposal about such a robot is also made (see, for example, Patent Document 1). In Patent Document 1, a means to enrich an emotion of a robot that acts autonomously on the basis of an operation corresponding to an encouragement from the outside and/or an internal state is proposed.

### CITATION LIST

### PATENT DOCUMENT

Patent Document 1: Japanese Patent Application Laid-Open No. 2005-169567

### SUMMARY OF THE INVENTION

### PROBLEMS TO BE SOLVED BY THE INVENTION

For example, a robot that copies an animal is developed for a person who wants to own a pet, and there is what copies a cat, a dog, or the like. It is demanded that such a robot such as a robot that copies a cat gives a meow instead of speaking a human language and acts like a cat. Thus, there is not a means to clearly transmit some kind of information such as information indicating intention to play to a user by sound or a display.

Transmission is impossible not only in a robot but also in a device that does not include a means to perform transmission by sound or a display in a case where it is desired to transmit some kind of information to a user. Thus, it is demanded to make transmission possible in a case where there is information desired to be transmitted to a user, and to prevent a user from failing to acquire the information.

The present technology is provided in view of such a situation and is to make is possible to more securely transmit information to a user.

### SOLUTIONS TO PROBLEMS

An information processing device of one aspect of the present technology includes an acquisition unit that acquires information from a different device, a detection unit that detects whether or not a user pays attention to the different device, and a transmission control unit that transmits the information to the user when it is detected by the detection unit that the user pays attention to the different device.

An information processing method of one aspect of the present technology includes the steps of acquiring information from a different device, detecting whether or not a user pays attention to the different device, and transmitting the information to the user when it is detected that the user pays attention to the different device.

A program of one aspect of the present technology causes a computer to execute processing including the steps of acquiring information from a different device, detecting whether or not a user pays attention to the different device, and transmitting the information to the user when it is detected that the user pays attention to the different device.

In the information processing device, the information processing method, and the program of one aspect of the present technology, information from a different device is acquired, and the information is transmitted to a user when the user pays attention to the different device.

Note that the information processing device may be an independent device or an internal block included in one device.

Furthermore, the program can be provided by being transmitted through a transmission medium or being recorded in a recording medium.

### EFFECTS OF THE INVENTION

According to one aspect of the present technology, it is possible to securely transmit information to a user.

Note that an effect described herein is not necessarily limited and may be any of the effects disclosed in the present disclosure.

### BRIEF DESCRIPTION OF DRAWINGS

Fig. 1 is a view illustrating a configuration of one embodiment of a system to which the present technology is applied.
Fig. 2 is a view illustrating a configuration example of an agent device.
Fig. 3 is a flowchart for describing an operation example of the system.
Fig. 4 is a view for describing a data structure of a request.
Fig. 5 is a view for describing a data structure of a response.
Fig. 6 is a view for describing a data structure of a completion notice.
Fig. 7 is a flowchart for describing processing of the agent device.
Fig. 8 is a flowchart for describing a different operation example of the system.
Fig. 9 is a view for describing a different data structure of a request.
Fig. 10 is a flowchart for describing different processing of the agent device.
Fig. 11 is a flowchart for describing a different operation example of the system.
Fig. 12 is a flowchart for describing a different operation example of the system.
Fig. 13 is a view for describing a different configuration example of the system.
Fig. 14 is a view for describing a different configuration example of the system.
Fig. 15 is a view for describing a recording medium.

### MODE FOR CARRYING OUT THE INVENTION

In the following, a mode for carrying out the present technology (hereinafter, referred to as embodiment) will be described.

### <Configuration example of system>

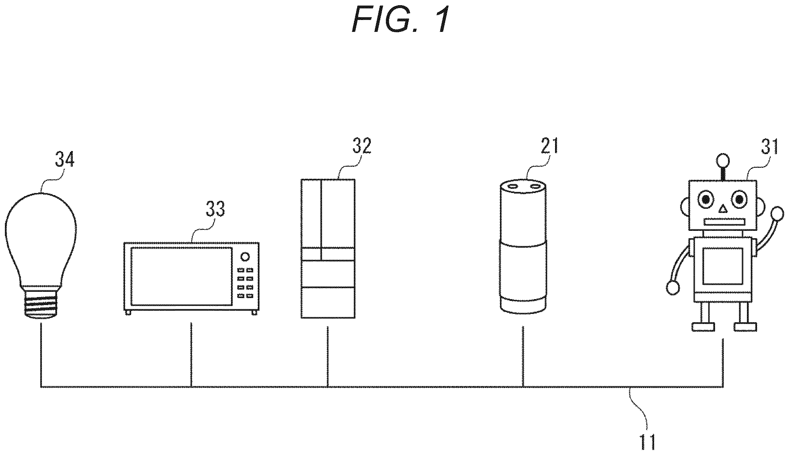

Fig. 1 is a view illustrating a configuration of one embodiment of an information processing system to which the present technology is applied. In the information processing system illustrated in Fig. 1, an agent device 21 is connected to a local network 11. Furthermore, a robot 31, a refrigerator 32, a television receiver 33, and a lighting device 34 are also connected to the local network 11.

It is assumed that the local network 11 is a network built in a house. Also, the local network 11 is, for example, a wireless or/and wired local area network (LAN) or wide area network (WAN) and is configured in such a manner that data can be transmitted/received between devices connected to each other.

Note that a configuration in which the robot 31, the refrigerator 32, the television receiver 33, and the lighting device 34 are connected to different LANs and these LANs are connected to a WAN may be employed. In other words, the present technology can be also applied to a system including devices connected to different networks.

The agent device 21 performs control to present information from a device connected to the local network 11 to a user or to present the information on a different device. Here, a description of the agent device 21 is continued with a case of functioning as an information processing device, which performs processing of such information, as an example. However, a different function such as a function of accessing an external server and searching for information, or presenting the found information in response to a request from a user may be included.

It is assumed that the robot 31 is a robot called a pet robot or the like. The robot 31 is a device that has an appearance copying a human, an animal, or the like and that functions as a pet or a friend of a user by communicating with the user.

It is assumed that each of the refrigerator 32, the television receiver 33, and the lighting device 34 belongs to a device called an Internet of things (IoT) device, is connected to a network, and has a function of exchanging information in addition to an original function.

### <Configuration example of agent device>

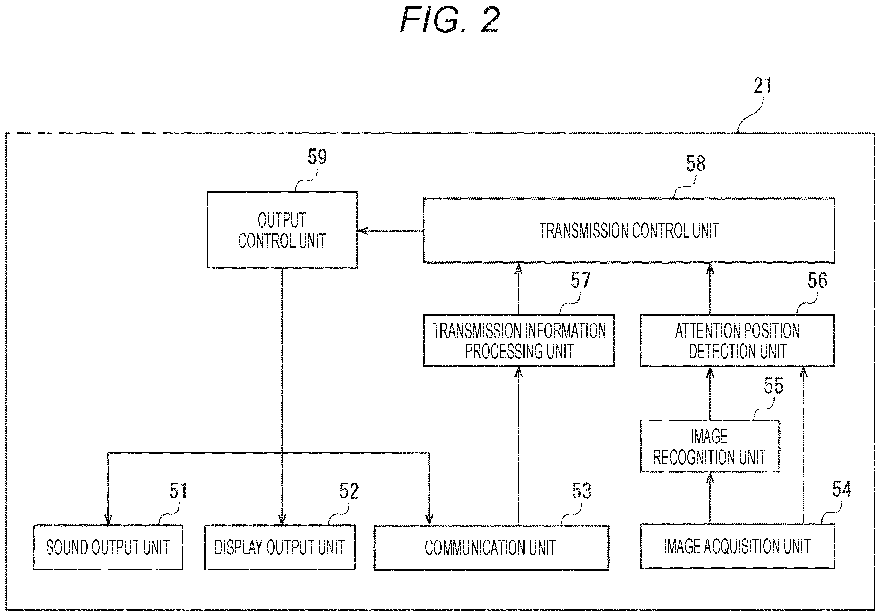

Fig. 2 is a view illustrating a configuration example of the agent device 21. The agent device 21 includes a sound output unit 51, a display output unit 52, a communication unit 53, an image acquisition unit 54, an image recognition unit 55, an attention position detection unit 56, a transmission information processing unit 57, a transmission control unit 58, and an output control unit 59.

The sound output unit 51 includes a speaker, and transmits information to a user by sound by outputting the sound. The display output unit 52 includes a display and transmits information to a user with a display by outputting text or an image.

The communication unit 53 transmits/receives data (information) to/from a different device through the local network 11. The image acquisition unit 54 includes an imaging device such as a camera and images, for example, a user, the robot 31, or the like. The image recognition unit 55 recognizes a user by using an image acquired by the image acquisition unit 54.

In order to recognize a user, the image recognition unit 55 previously holds information of a face of the user such as information of a feature point extracted from the face. The image recognition unit 55 compares the held information with information acquired from an image supplied from the image acquisition unit 54, determines whether or not it is a registered user, and specifies a user. Furthermore, recognition of a device such as the robot 31 is performed.

The attention position detection unit 56 detects a place where the user recognized by the image recognition unit 55 is, or detects a direction the user faces, a device on which a gaze thereof is, or the like. For example, the image acquisition unit 54 acquires an image from each of a plurality of rooms, and from which room an image including the user is acquired is determined, whereby the room is specified. Furthermore, it is possible to analyze a direction of a gaze of the user by analyzing the image acquired by the image acquisition unit 54. Also, it is possible to detect a device in the gaze direction.

The transmission information processing unit 57 performs processing associated with information which is supplied from a different device through the communication unit 53 and transmission of which to the user is requested. For example, a device that gives a request for transmission of the information to the user is specified, a place where the specified device is installed is specified, and transmission contents are specified.

The transmission control unit 58 performs control to transmit, to the user, information specified by the transmission information processing unit 57 as the information to be transmitted to the user. Although a detail will be described later, for example, in a case where transmission of information A to the user is requested by the refrigerator 32 and a case where a device on which a gaze of the user is and which is detected by the attention position detection unit 56 is a device, which includes a display device, such as the television receiver 33, the transmission information processing unit 57 performs control of displaying the information A on the television receiver 33 watched by the user.

On the basis of an instruction from the transmission control unit 58, the output control unit 59 controls any one or more of the sound output unit 51, the display output unit 52, and the communication unit 53 and outputs information. In the above-described example, control of controlling the display output unit 52 and displaying the information A on the television receiver 33 is performed.

### <Processing in system>

### <First embodiment of case where information from robot is transmitted>

Here, a description is added with respect to processing in the system illustrated in Fig. 1. Also, here, the description will be made with a case of transmitting information from the robot 31 to a user as an example.

Here, the case of transmitting information from the robot 31 to the user will be described while being divided into processing of transmitting the information when a gaze of the user moves to the robot 31 (assumed as first embodiment) and processing of transmitting the information when a gaze of the user is on the robot 31 (assumed as second embodiment).

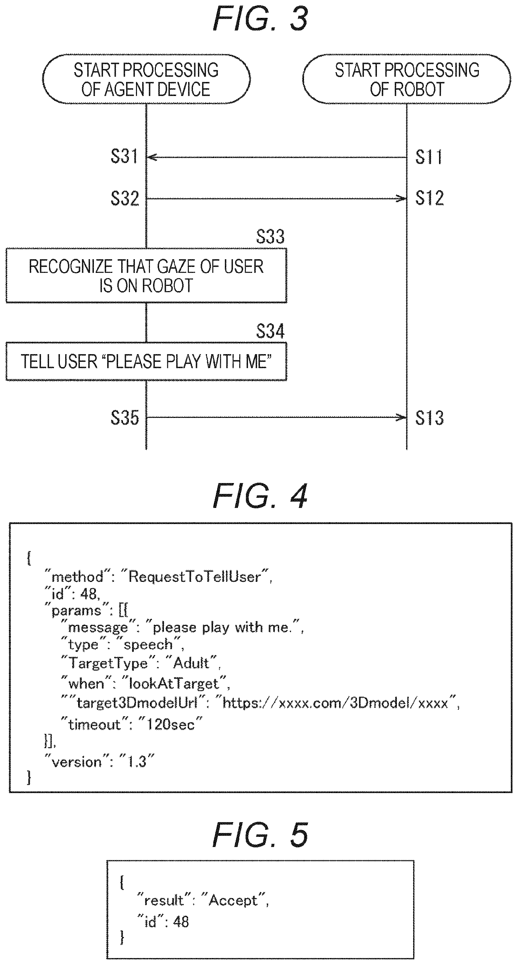

The first embodiment will be described with reference to the flowchart illustrated in Fig. 3.

In step S11, the robot 31 transmits a request to the agent device 21. In step S31, the agent device 21 receives the request from the robot 31. The transmitted/received request is, for example, data in a manner illustrated in Fig. 4.

With reference to Fig. 4, by data of "method" : "Request To Tell User" and "id" : "48, it is indicated that a request is for transmission of information to the user and an ID to identify this request is "48".

Furthermore, by data of "message" : "please play with me.", "type" : "speech", "Target Type" : "Adult", and "when" : "look At Target", it is indicated that a request is to tell "please play with me" to an adult user by sound when the user looks at a target, that is, the robot 31 in this case.

Note that the description is continued with a case of "Target Type" : "Adult" as an example. However, "Target Type" : "Female" or "Target Type" : "Children" is also possible and a target may be a woman or a child.

Furthermore, data may be "Target User" : "Family 01" or "Target User" : "Family any". In a case of such data, for example, in a case where a father is indicated by "01", it is indicated that the father is designated as a target. In a case where such designation is made, a request is executed with respect to the father at a time point at which the father is recognized. Furthermore, in a case of "any", a target is a family. A request is executed when a family is recognized.

Furthermore, by data of "target 3Dmodel Url" : "https://xxx.com/3Dmodel/xxx", a URL including information of an appearance of the robot 31 is presented. Such information is used, for example, as information of when the agent device 21 analyzes an image acquired by the image acquisition unit 54 and determines whether or not this is the robot 31. Such information only needs to be presented if necessary, and may not be included in a request, for example, when this URL is accessed once and information of an appearance of the robot 31 is downloaded by a side of the agent device 21.

Also, by data of "time out" : "120sec", it is indicated that an effective period of this request is set and this request is canceled when the user does not look at the robot 31 within 120 seconds in this case.

Such data is transmitted as a request from the robot 31 to the agent device 21. Note that this data is an example and is not a description indicating a limitation. Similarly, data described in the following also indicates an example and is not a description indicating a limitation. Thus, a different data structure or different data may be included.

When receiving a request from the robot 31 in step S31, the agent device 21 transmits a response in step S32. In step S12, the robot 31 receives the response from the agent device 21. The transmitted/received response is, for example, data in a manner illustrated in Fig. 5.

With reference to Fig. 5, by data of "result" : "Accept" and "id" : "48", it is indicated that a request from the robot 31, a request ID thereof being identified by 48, is received by the agent device 21.

Such data is transmitted as a response from the agent device 21 to the robot 31. The agent device 21 transmits the response to the robot 31 and starts processing with respect to the received request.

In step S33, the agent device 21 recognizes that a gaze of a user is on the robot 31. When recognizing that the gaze of the user is on the robot 31, the agent device 21 transmits a sound "please play with me" to the user in step S34. In such a manner, the agent device 21 executes processing corresponding to the request from the robot 31.

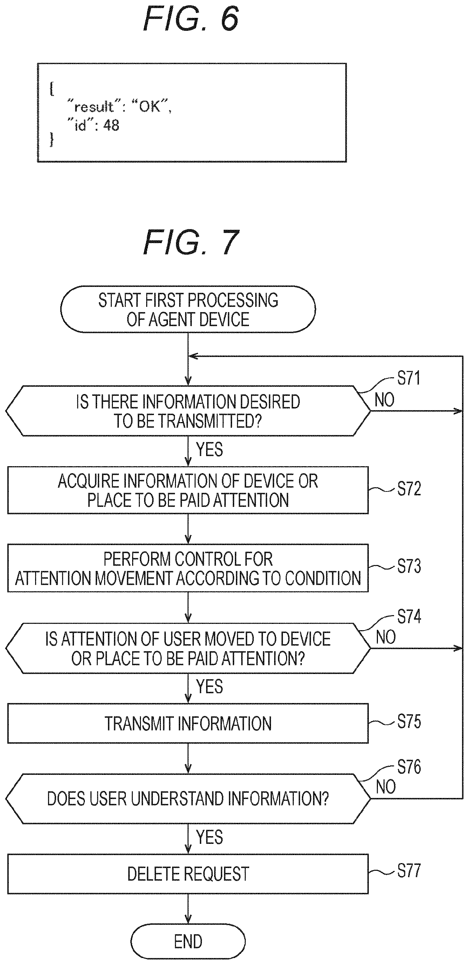

When completing the processing with respect to the request, the agent device 21 transmits a completion notice indicating that the processing is completed to the robot 31 in step S35. The robot 31 receives the completion notice from the agent device 21 in step S13. The transmitted/received completion notice is, for example, data in a manner illustrated in Fig. 6.

With reference to Fig. 6, by data of "result" : "OK" and "id" : "48", it is indicated that the processing with respect to the request from the robot 31 with the request ID being 48 is executed normally.

Note that in a case where the user does not look at a side of the robot 31 in an effective period that is 120 seconds in this case and the request from the robot 31 is not executed, data of "result" : "NG" and "id" : "48" is transmitted from the agent device 21 to the robot 31.

In such a manner, in a case where the robot 31 itself has a specification with which it is not possible to speak a human language such as "please play with me", the agent device 21 tells the user "please play with me" as a message (information) from the robot 31 instead of the robot 31. Thus, even a device that does not include a means to transmit information to the user can transmit information by the agent device 21.

Furthermore, since information such as "please play with me" is transmitted when the user looks at a device that is a source of information and that is the robot 31 in this case, it becomes possible to securely transmit the information.

In other words, since information is transmitted when a source of the information is looked at, it is possible to transmit the information when the user pays attention thereto and to make the user pay attention to the information itself. Thus, it is possible to securely transmit contents of the information to the user.

Furthermore, since information is presented when a source of the information is looked at, it becomes possible to securely tell the user that the information is from a device being looked at (source) in addition to the transmitted information.

A detail of processing of the agent device 21 of when processing based on the flowchart illustrated in Fig. 3 is executed will be described with reference to a flowchart in Fig. 7.

In step S71, it is determined whether or not there is information desired to be transmitted to the user. This determination is made, for example, by determination by the transmission control unit 58 (Fig. 2) whether or not a request is received from a different device. For example, if a request is received by the communication unit 53 from a different device such as the robot 31, the request is supplied to the transmission information processing unit 57.

If the request that is supplied through the communication unit 53 and that is, for example, data in a manner illustrated in Fig. 4 is supplied, the transmission information processing unit 57 analyzes the data and, for example, supplies the transmission control unit 58 an analysis result indicating that the request is by the robot 31 for transmission of "please play with me" to the user as described in the above example.

When receiving the analysis result from the transmission information processing unit 57, the transmission control unit 58 determines in step S71 that there is information desired to be transmitted and advances the processing to step S72 in a case where the analysis result includes an analysis result indicating that there is the information desired to be transmitted.

Until it is determined in step S71 that there is information desired to be transmitted, the processing in step S71 is repeated and a standby state is kept.

In step S72, the agent device 21 acquires information associated with a device or place to be paid attention. In the above-described example, a device to be paid attention is the robot 31 and information associated with a place where the robot 31 is is acquired.

In a case where information indicating in which room the robot 31 is installed is acquired in advance, the transmission control unit 58 specifies a position of the robot 31 by using the information.

For example, once the refrigerator 32, the television receiver 33 (Fig. 1), or the like is installed, an installation position thereof is not likely to be changed. In a case of such a device, when a position is specified once, positional information thereof may be registered and the registered information may be used in execution of the processing in step S72. Also, positional information may be registered by the user and the information may be used.

In a case of a device, a position of which may be changed, such as the robot 31, a position or the like may be specified by utilization of the registered information, or a position may be specified by image recognition. For example, the data of the request illustrated in Fig. 4 also includes information of a URL where appearance data of the robot 31 is. The transmission control unit 58 accesses the URL included in the data of the request and acquires the appearance data of the robot 31.

Furthermore, the transmission control unit 58 analyzes an image acquired by the image acquisition unit 54 and determines whether or not a corresponding object is imaged in the image by using the acquired appearance data of the robot 31. By the determination that the robot 31 is imaged in the image, it is possible to specify that the robot 31 is in a room where the image is imaged.

In such a manner, in a case where a position can be specified from the information registered in advance, a position is specified by utilization of the registered information. In a case where such information cannot be used, a position is specified by a different method such as image recognition described above.

In step S73, control for an attention movement according to a condition is performed. In the above-described example, in a case where the user does not face the robot 31, processing of attracting attention of the user to the robot 31 is executed. For example, the output control unit 59 executes processing of attracting attention of the user to the robot 31 by controlling the sound output unit 51 and outputting a message such as "the robot is calling".

Note that the processing in step S73 may be omitted. For example, such processing may be executed in a case where a request from a different device includes a request for attracting attention of the user, and may not be performed in a case where such a request is not included.

In step S74, the agent device 21 determines whether or not the user moves to a device or place to be paid attention. In other words, it is determined in step S74 whether or not a gaze of the user is on a position to be paid attention. For example, the attention position detection unit 56 (Fig. 2) analyzes the image acquired by the image acquisition unit 54 and detects a gaze direction of the user. By determination by the transmission control unit 58 whether or not the detected gaze direction corresponds to the device to be paid attention or a place where the device is, the device or place being acquired in step S72, the processing in step S74 is executed.

In a case where it is not determined in step S74 that the user moves to the device or place to be paid attention (gaze of user is on device or place to be paid attention), the processing is returned to step S71 and the processing thereafter is repeated. In this case, the processing is repeated until the gaze of the user moves to the device or place to be paid attention.

Note that in a case where an effective period of the request is set, determination whether or not it is in the effective period may be made when it is determined that the user does not move to the device or place to be paid attention at a time point before step S74 or in step S74.

On the one hand, in a case where it is determined in step S74 that the user moves to the device or place to be paid attention, the processing is advanced to step S75. In step S75, information is transmitted to the user. In the above-described example, information indicating that the robot 31 is asking the user to play together is transmitted. For example, a sound such as "please play with me" is output by control of the sound output unit 51 by the output control unit 59 according to an instruction from the transmission control unit 58.

In step S76, it is determined whether or not the user understands the information. For example, when the user makes a sound to express understanding such as "OK", makes a movement such as nodding, or actually starts playing with the robot 31 in response to the message "please play with me", it is determined that the user understands the information and the processing is advanced to step S77.

On the one hand, in a case where it is determined in step S76 that the user does not understand the information, the processing goes back to step S71 and the processing thereafter is repeated.

Note that the processing in step S76 may be omitted, and the processing may be advanced to step S77 if the processing related to transmission of the information is ended in step S75.

In step S77, the information desired to be transmitted is deleted. In other words, the request received from the different device is deleted. Note that when the request is deleted, as the processing in step S35, a completion notice indicating that processing with respect to the request is executed or not executed normally may be output to a device that gives the request, as described with reference to the flowchart in Fig. 3.

In such a manner, in a case where there is a request from a different device, the agent device 21 executes processing with respect to the request.

### <Second embodiment of case where information from robot is transmitted>

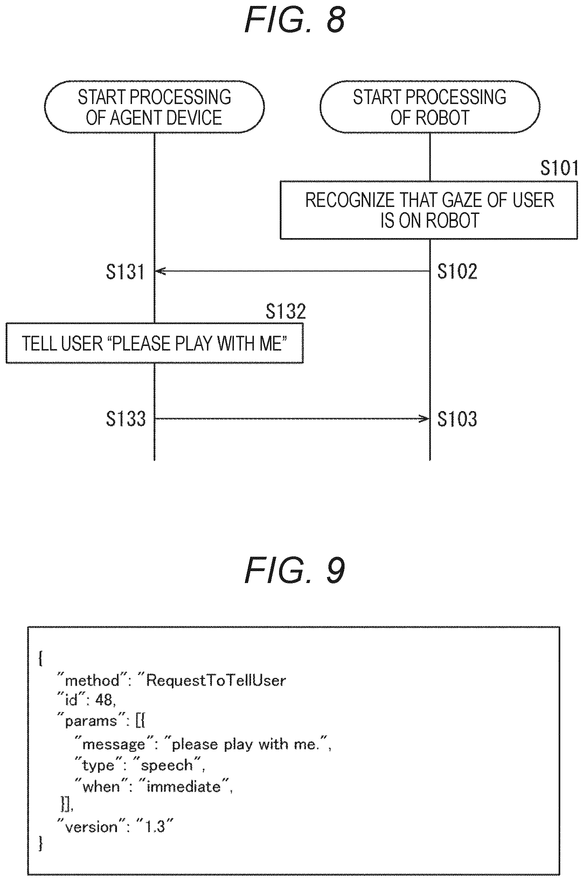

A description is added to processing in the system illustrated in Fig. 1. Here, processing of transmitting information when a gaze of a user is on a robot 31 (second embodiment) will be described with reference to a flowchart illustrated in Fig. 8.

In step S101, the robot 31 recognizes that a gaze of a user is on the robot 31 (itself). This recognition can be realized by a configuration in which the robot 31 itself has a function of detecting a gaze of a user and detects that a gaze of a user is on itself by the function.

Furthermore, similarly to the above-described first embodiment, a configuration in the following manner is possible. That is, an agent device 21 detects a gaze of the user and determines whether or not the detected gaze is on the robot 31, and when it is determined that the gaze of the user is on the robot 31, such a determination result is transmitted from the agent device 21 to the robot 31, whereby the robot 31 recognizes that the gaze of the user is on itself.

When recognizing that the gaze of the user is on the robot 31 in step S101, the robot 31 gives a request to the agent device 21 in step S102. In step S131, the agent device 21 receives the request from the robot 31. The transmitted/received request is, for example, data in a manner illustrated in Fig. 9.

A description about the same data in data associated with the request illustrated in Fig. 9 and data associated with the request illustrated in Fig. 4 will be omitted. The data associated with the request illustrated in Fig. 9 is data of "when" : "immediate", and it is indicated that the request is to immediately tell a user "please play with me" by sound.

Such data is transmitted as a request from the robot 31 to the agent device 21.

When receiving a request from the robot 31 in step S131, the agent device 21 transmits "please play with me" to the user by sound in step S132. In such a manner, the agent device 21 executes processing corresponding to the request from the robot 31.

When the processing with respect to the request is completed, the agent device 21 transmits a completion notice indicating that the processing is completed to the robot 31 in step S133. The robot 31 receives the completion notice from the agent device 21 in step S103. The transmitted/received completion notice is, for example, data in a manner illustrated in Fig. 6, and a description thereof is omitted here since the data illustrated in Fig. 6 has been described already.

In such a manner, in a case where the robot 31 itself cannot speak a human language such as "please play with me", the agent device 21 transmits a message (information) from the robot 31 to the user instead of the robot 31. Thus, even a device that does not include a means to transmit information to the user can transmit information by the agent device 21.

A detail of processing of the agent device 21 of when processing based on a flowchart illustrated in Fig. 8 is executed will be described with reference to a flowchart in Fig. 9. The processing of the flowchart illustrated in Fig. 9 is started by the agent device 21 when a request from a different device is received.

In step S171, an image is acquired. This image is acquired to acquire information associated with a device that recognizes a gaze of a user or with a position of the device, or the like in step S172. The processing in step S172 can be performed in a manner similar to that of the processing in step S72 in the flowchart in Fig. 7. In other words, a device that recognizes a gaze of the user (device that give request) is specified and a place where the device is is specified from the acquired image.

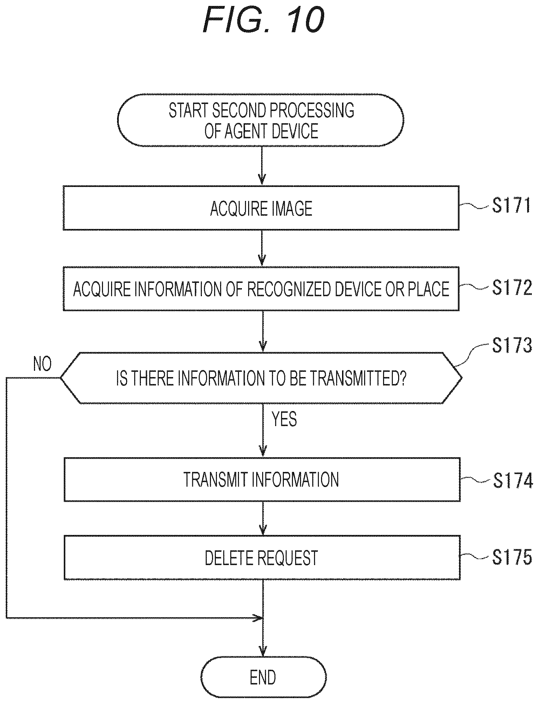

It is determined in step S173 whether or not there is information to be transmitted. The received data is analyzed and it is determined whether or not a request is indicating that there is information desired to be transmitted to the user. In a case where it is determined in step S173 that there is no information to be transmitted, processing of a flowchart illustrated in Fig. 10 is ended. Note that even in a case where it is determined that there is no information to be transmitted, processing with respect to a request from a different device is performed.

On the other hand, in a case where it is determined in step S173 that there is information to be transmitted, the processing is advanced to step S174. In step S174, the information is transmitted to the user in response to a request from a different device. For example, in the above-described example, information indicating "please play with me" is transmitted to the user by sound as a message from the robot 31.

In step S175, the information desired to be transmitted is deleted. In other words, the request received from the different device is deleted. Note that when the request is deleted, a completion notice indicating that processing with respect to the request is executed or not executed normally may be output to the device that gives the request, as described with reference to the flowchart in Fig. 8.

In such a manner, in a case where there is a request from a different device, the agent device 21 executes processing with respect to the request.

### <First different detailed example>

In the above-described embodiment, a description has been made with a case of processing a request from a robot 31 as an example. Here, the description will be continued with a case of processing a request from a device other than the robot 31 as an example.

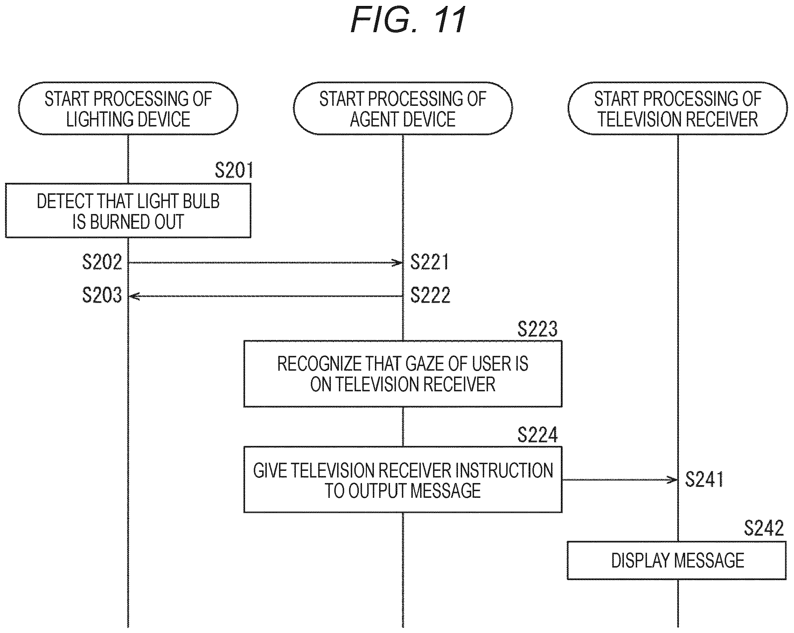

With reference to a flowchart in Fig. 11, a description will be made with a case of processing a request from a lighting device 34 as an example.

In step S201, the lighting device 34 detects that a light bulb is burned out. In step S202, the lighting device 34 gives an agent device 21 a request to tell a user that the light bulb is burned out. For example, data of the request transmitted/received here can have a data structure in a manner described with reference to Fig. 4, and contents thereof can be to tell the user that the light bulb is burned out.

When receiving the request from the lighting device 34 in step S221, the agent device 21 outputs a response indicating that the request is received to the lighting device 34 in step S222. The lighting device 34 receives such a response in step S203. The data of the response transmitted/received here can have a data structure in a manner described with reference to Fig. 5, for example.

The agent device 21 starts processing to respond to the request from the lighting device 34. In step S223, the agent device 21 recognizes that a gaze of the user is on a television receiver 33. Since the lighting device 34 is a device that does not include a means to output sound or to display a message as a means to transmit information to the user, information is transmitted by the television receiver 33 including such a means.

Thus, the agent device 21 detects in step S223 whether or not a gaze of the user is on the television receiver 33 that displays information. When detected, the gaze of the user is recognized to be on the television receiver 33, and the processing is advanced to step S224.

In step S224, the agent device 21 gives an instruction to the television receiver 33 to output a message. This instruction, for example, includes an instruction to display a message such as "the light bulb is burned out".

When receiving the instruction from the agent device 21 in step S241, the television receiver 33 executes processing based on the received instruction in step S242. That is, in this case, the television receiver 33 displays the message "the light bulb is burned out" on a screen.

Alternatively, a message such as "please look at the light bulb" may be displayed. A message to make the user move the gaze to a side of the light bulb (lighting device 34) may be displayed. Then, the message "the light bulb is burned out" may be displayed on the television receiver 33 after it is detected that the user moves the gaze to the side of the light bulb.

In such a manner, a device that does not include a means to transmit information to the user, that is, the lighting device 34 in this case transmits information by a different device that is the television receiver 33 through the agent device 21. Furthermore, the agent device 21 performs control in such a manner that information is presented at timing at which the gaze of the user is on the television receiver 33, that is, at timing at which the user pays attention to a device that transmits information.

Even in a case where such processing is executed in the agent device 21, the above-described processing based on the flowchart illustrated in Fig. 7 is executed in the agent device 21.

A simple description is added with reference to the flowchart illustrated in Fig. 7 again. In step S71, the agent device 21 determines that there is information desired to be transmitted at a time point at which a request is received from the lighting device 34, and advances the processing to step S72.

In step S72, information of the television receiver 33 is acquired as information of a device or place to be paid attention. In this case, in order to display a message, the television receiver 33 is selected as a device desired to attract attention of the user and information associated with the television receiver 33 is acquired.

In step S73, control for an attention movement according to a condition is performed. However, this control can be omitted. For example, a sound of a message such as "please look at the television receiver" may be output.

In step S74, it is determined whether or not attention of the user is on a device to be paid attention, that is, the television receiver 33 in this case. When it is determined in step S74 that the attention of the user is on the television receiver 33, the processing is advanced to step S75 and transmission of information is performed. For example, when the user is watching a program on the television receiver 33, a message such as "the light bulb is burned out" or a message such as "please look at the light bulb" is displayed on a display. Processing for causing such a message to be displayed is executed by the agent device 21 in step S75.

In step S76, it is determined whether or not the user understands the information. For example, in a case where it is determined that a gaze of the user is moved to a side of the light bulb, it is determined that the user understands the information. Then, in step S77, the request from the lighting device 34 is deleted and the processing with respect to the request from the lighting device 34 is ended.

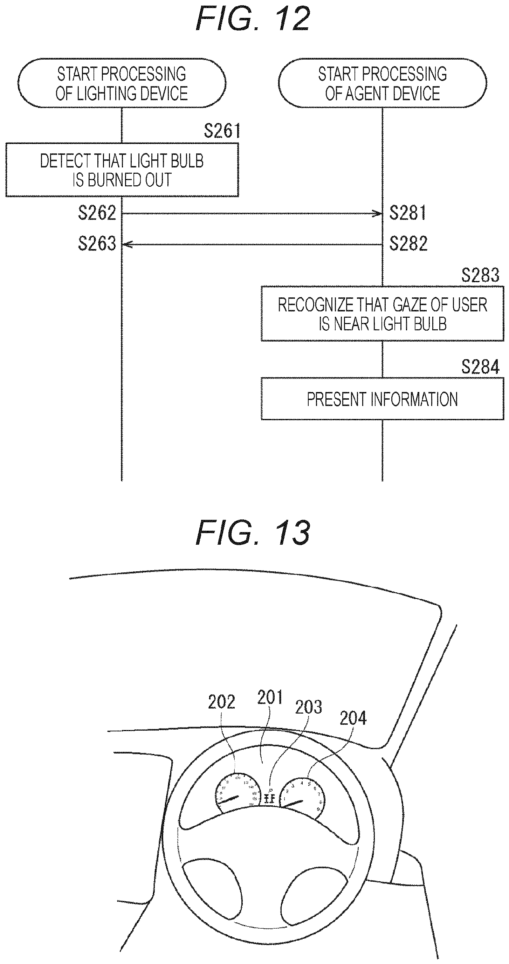

Next, a different example of a case of processing a request from the lighting device 34 will be described with reference to a flowchart in Fig. 12.

Since processing in step S261 to S263 executed in the lighting device 34 is performed in a manner similar to that of step S201 to S203 in the flowchart in Fig. 11, a description thereof is omitted. Furthermore, since processing in step S281 and S282 executed in the agent device 21 is performed in a manner similar to that of step S221 and S222 in the flowchart in Fig. 11, a description thereof is omitted.

When recognizing that a gaze of a user is near a light bulb in step S283, the agent device 21 advances the processing to step S284, and presents information to the user. In this case, for example, the agent device 21 speaks a message such as "the light bulb is burned out", whereby information requested by the lighting device 34 is transmitted to the user.

In such a manner, the agent device 21 itself may transmit the information from the lighting device 34. Furthermore, it is possible to make the information from the lighting device 34 transmitted when the user looks at the lighting device 34 (light bulb).

### <Second different detailed example>

A further description about a detailed example is added. Note that since a basic flow of processing in a system is similar to that in the above-described case, an overlapped description is arbitrarily omitted.

As a different detailed example, a description will be made with a case of processing a request from a refrigerator 32 as an example.

When detecting a product that exceeds a best-before date (expiration date) inside, the refrigerator 32 gives an agent device 21 a request for transmission of information indicating that there is a food that exceeds the best-before date to a user.

The agent device 21 that receives the request from the refrigerator 32, detects that the user is in the vicinity of the refrigerator 32 or looking inside the refrigerator 32, and speaks a message such as "there is a food that exceeds a best-before date" to the user at the timing.

Alternatively, the agent device 21 that receives the request from the refrigerator 32 displays a message such as "there is a food that exceeds a best-before date" on a television receiver 33 for the user in a case where the user is watching a program on the television receiver 33 when the request is received, for example.

Alternatively, the refrigerator 32 may give a request to the agent device 21 when detecting that the user is in the vicinity or is looking inside. Then, the agent device 21 speaks a message such as "there is a food that exceeds a best-before date" to the user at a time point at which the request from the refrigerator 32 is received.

In such a manner, in a case the refrigerator 32 is a source of information, the information from the refrigerator 32 that is the source of the information is transmitted when the user pays attention to (can pay attention to) the refrigerator 32. Alternatively, in a case where the refrigerator 32 is a source of information, the information from the refrigerator 32 that is the source of the information is transmitted when the user pays attention (can pay attention), for example, to the television receiver 33 including a means that can transmit the information.

As a different detailed example, a description will be made with a case of processing a request from a ventilating fan (not illustrated) as an example.

When detecting that the ventilating fan becomes dirty and cleaning becomes necessary, the ventilating fan gives an agent device 21 a request for transmission of information indicating that it is time for cleaning to the user.

While giving the request, the ventilating fan starts control in such a manner that a sound of the fan becomes large. If the user pays attention to the ventilating fan because of the large sound of the fan, the agent device 21 detecting that speaks a message such as "it is time for cleaning" to the user.

The control of making a sound of the fan large may be started by an instruction given to the ventilating fan when the agent device 21 detects that the user is near the ventilating fan after receiving the request from the ventilating fan. In this case, the agent device 21 performs the control in such a manner that the user pays attention to the ventilating fan, and the information from the ventilating fan is presented to the user when the user pays attention to the ventilating fan as a result thereof.

In such a manner, in a case where the ventilating fan is a source of information, processing of attracting attention of the user to the ventilating fan is performed by the ventilating fan itself or the agent device 21, and the information from the ventilating fan that is the source of the information is transmitted when the user pays attention to the ventilating fan as a result thereof.

As a different detailed example, a description will be made with a case of processing a request from a cleaning robot (not illustrated) as an example.

In a case where it is detected that the cleaning robot becomes unable to move due to a step or the like, a request for transmission of information indicating that movement becomes impossible is given to an agent device 21.

The agent device 21 detects a position where the cleaning robot is, searches for a lighting device 34 in the vicinity thereof, and makes the lighting device 34 blink. In a case where the lighting device 34 blinks and the agent device 21 detects that a user notices the blink and moves a gaze to a side of the lighting device 34 or moves closer to the side of the lighting device 34, a message such as "the cleaning robot is unable to move" is spoken to the user.

In such a manner, in a case where the cleaning robot is a source of information, the agent device 21 performs processing of attracting attention of the user to the cleaning robot, and the information from the cleaning robot that is the source of the information is transmitted when the user pays attention to the cleaning robot (pay attention to vicinity of cleaning robot) as a result thereof.

### <Third different detailed example>

A further description about a detailed example is added. The above-described detailed example has been described with a case where an agent device 21 is in a house as an example. However, the agent device 21 is not necessarily in the house and may be installed in a different place. For example, installation in a vehicle is possible.

Fig. 13 is a view illustrating an instrument or the like that can be seen by a driver (user) from a driver seat side of a vehicle. The driver can see a speedometer 202, a fuel gauge 203, and a tachometer 204 in a front panel 201. In the vehicle, an agent device 21 is installed as a device to manage these although not illustrated in Fig. 13.

For example, in a case of detecting that speed exceeds a speed limit, the speedometer 202 gives the agent device 21 a request for transmission of information indicating that the speed is too high to the user.

When detecting a gaze of the user and detecting that the gaze of the user is on (speedometer 202 in) the front panel 201, the agent device 21 transmits the information to the user, for example, by executing processing such as making the speedometer 202 emit light or speaking a message such as "the speed is too high".

Also, for example, in a case of detecting that remaining fuel becomes little, the fuel gauge 203 gives the agent device 21 a request for transmission of information indicating that the remaining fuel is little to the user.

When detecting a gaze of the user and detecting that the gaze of the user is on (fuel gauge 203 in) the front panel 201, the agent device 21 transmits the information to the user, for example, by executing processing such as making the fuel gauge 203 emit light or speaking a message such as "the remaining fuel is little".

Also, for example, when detecting that maintenance is not performed for a while, the agent device 21 detects a gaze of the user, and transmits information to the user, for example, by executing processing such as making an icon indicating maintenance emit light, making the tachometer 204 emit light, or speaking a message such as "please perform maintenance" when detecting that the gaze of the user is on the front panel 201.

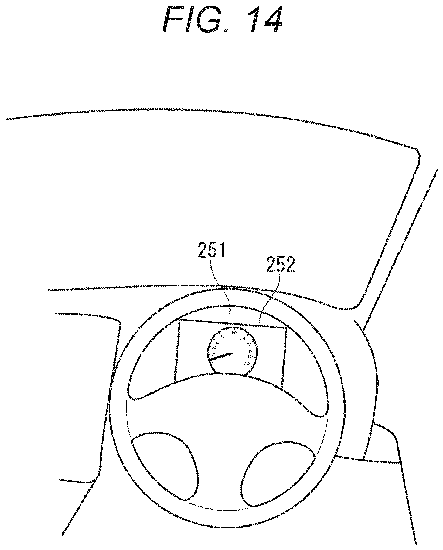

Fig. 14 is a view illustrating an instrument or the like that can be seen by a driver (user) from a driver seat side of a vehicle and is a view illustrating an example different from the example illustrated in Fig. 13. A front panel 251 includes a display 252. The speedometer 202, the fuel gauge 203, the tachometer 204, and the like illustrated in Fig. 13 are displayed on the display 252.

For example, in a case where it is detected that speed exceeds a speed limit, an agent device 21 displays the speedometer 202 on the display 252. This display is performed when the agent device 21 detects a gaze of the user and detects that the gaze of the user is on the front panel 251.

Alternatively, when detecting a gaze of the user and detecting that the gaze of the user is on the front panel 251, the agent device 21 transmits information to the user by performing control such as displaying the speedometer 202, which is displayed on the display 252, in a bright manner or in a blinking manner.

Also, for example, in a case where it is detected that remaining fuel becomes little, the agent device 21 makes the fuel gauge 203 displayed on the display 252. This display is performed when the agent device 21 detects a gaze of the user and detects that the gaze of the user is on the front panel 251.

Alternatively, when detecting a gaze of the user and detecting that the gaze of the user is on the front panel 251, the agent device 21 transmits information to the user by performing control such as displaying the fuel gauge 203, which is displayed on the display 252, in a blight manner or in a blinking manner.

Also, for example, when detecting that maintenance is not performed for a while, the agent device 21 detects a gaze of the user, and transmits information to the user, for example, by executing processing such as displaying an icon indicating maintenance or making the displayed icon, which indicates maintenance, emit light when detecting that the gaze of the user is on the display 252.

In this case, information may be also transmitted to the user by sound.

In such a manner, when information desired to be transmitted to the user is generated, the information is transmitted when a gaze of the user is on a position to which the information is transmitted. Thus, it becomes possible to securely transmit the information.

### <About recording medium>

The above-described series of processing can be executed by hardware or by software. In a case where the series of processing is executed by software, a program included in the software is installed into a computer. Here, for example, the computer includes a computer embedded in special hardware, a general personal computer that can execute various functions by installation of various programs, and the like.

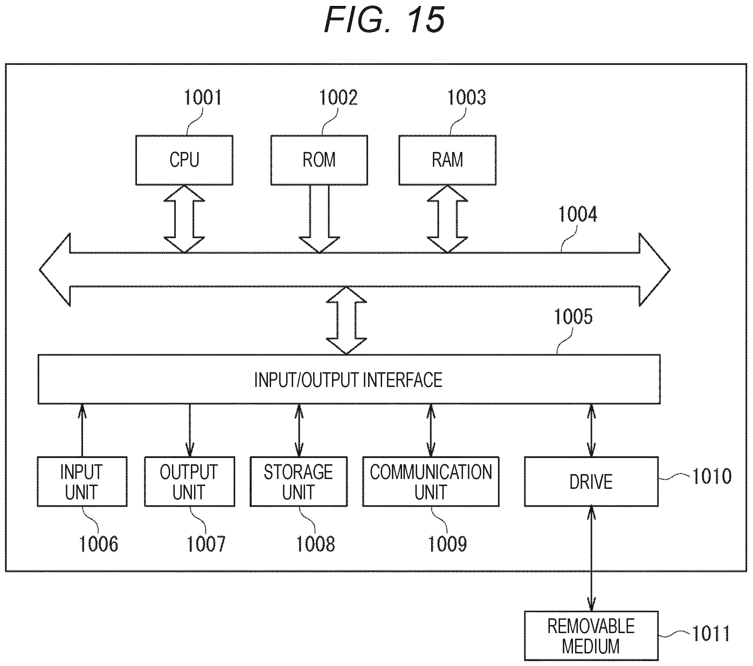

Fig. 15 is a block diagram illustrating a configuration example of hardware of a computer that executes the above-described series of processing by a program. In a computer, a central processing unit (CPU) 1001, a read only memory (ROM) 1002, and a random access memory (RAM) 1003 are connected to each other by a bus 1004. An input/output interface 1005 is further connected to the bus 1004. An input unit 1006, an output unit 1007, a storage unit 1008, a communication unit 1009, and a drive 1010 are connected to the input/output interface 1005.

The input unit 1006 includes a keyboard, a mouse, a microphone, or the like. The output unit 1007 includes a display, a speaker, or the like. The storage unit 1008 includes a hard disk, a nonvolatile memory, or the like. The communication unit 1009 includes a network interface or the like. The drive 1010 drives a removable medium 1011 such as a magnetic disk, an optical disk, a magneto optical disk, or a semiconductor memory.

In the computer configured in the above manner, for example, the CPU 1001 loads a program stored in the storage unit 1008 into the RAM 1003 through the input/output interface 1005 and the bus 1004 and performs execution thereof, whereby the above-described series of processing is performed.

For example, the program executed by the computer (CPU 1001) can be provided by being recorded in the removable medium 1011 that functions as a package medium or the like. Furthermore, the program can be provided through a wired or wireless transmission medium such as a local area network, the Internet, or digital satellite broadcasting.

In the computer, the program can be installed into the storage unit 1008 through the input/output interface 1005 by mounting the removable medium 1011 to the drive 1010. Furthermore, the program can be received in the communication unit 1009 through the wired or wireless transmission medium and installed into the storage unit 1008. In addition, the program can be previously installed into the ROM 1002 or the storage unit 1008.

Note that a program executed by the computer may be a program in which processing is performed in time series in order described in the present description or may be a program in which processing is performed in parallel or at necessary timing such as at performance of a call.

Furthermore, in the present description, a system indicates a whole device including a plurality of devices.

Note that an effect described in the present description is just an example and not a limitation. Also, there may be a different effect.

Note that an embodiment of the present technology is not limited to the above-described embodiment and various modifications can be made within the spirit and the scope of the present technology.

Note that the present technology can also include the following configurations.
(1) An information processing device including:
   an acquisition unit that acquires information from a different device;
   a detection unit that detects whether or not a user pays attention to the different device; and
   a transmission control unit that transmits the information to the user when it is detected by the detection unit that the user pays attention to the different device.
(2) The information processing device according to (1)
   in which the transmission control unit does not perform transmission of the information until the detection unit detects that the user pays attention to the different device.
(3) The information processing device according to (1) or (2),
   in which the information includes information that is output when the user pays attention to the different device.
(4) The information processing device according to any one of (1) to (3),
   in which when the user pays attention to a device including a display device, the transmission control unit displays the information on the display device.
(5) The information processing device according to any one of (1) to (4),
   in which the transmission control unit transmits the information to the user after executing processing of attracting attention of the user to the different device.
(6) The information processing device according to any one of (1) to (5),
   in which the transmission control unit displays, on the device including the display device, a message to attract attention to the different device and transmits the information to the user after the user pays attention to the different device as a result thereof.
(7) The information processing device according to (1),
   in which the different device includes a plurality of instruments,
   the detection unit detects whether or not the user pays attention to the instruments, and
   the transmission control unit transmits the information by the instruments.
(8) The information processing device according to (1),
   in which the different device includes a plurality of instruments,
   the detection unit detects whether or not the user pays attention to a display device that displays the instruments, and
   the transmission control unit displays, on the display device, the instruments that output information.
(9) An information processing method including the steps of:
   acquiring information from a different device;
   detecting whether or not a user pays attention to the different device; and
   transmitting the information to the user when it is detected that the user pays attention to the different device.
(10) A program for causing a computer to execute processing including the steps of:
   acquiring information from a different device;
   detecting whether or not a user pays attention to the different device; and
   transmitting the information to the user when it is detected that the user pays attention to the different device.

### REFERENCE SIGNS LIST

- 11: Local network
- 21: Agent device
- 31: Robot
- 32: Refrigerator
- 33: Television receiver
- 34: Lighting device
- 51: Sound output unit
- 52: Display device unit
- 53: Communication unit
- 54: Image acquisition unit
- 55: Image recognition unit
- 56: Attention position detection unit
- 57: Transmission information processing unit
- 58: Transmission control unit
- 59: Output control unit
- 201: Front panel
- 202: Speedometer
- 203: Fuel gauge
- 204: Tachometer

## Claims

1. An information processing device comprising:
an acquisition unit that acquires information from a different device;
a detection unit that detects whether or not a user pays attention to the different device; and
a transmission control unit that transmits the information to the user when it is detected by the detection unit that the user pays attention to the different device.

2. The information processing device according to claim 1,
wherein the transmission control unit does not perform transmission of the information until the detection unit detects that the user pays attention to the different device.

3. The information processing device according to claim 1,
wherein the information includes information that is output when the user pays attention to the different device.

4. The information processing device according to claim 1,
wherein when the user pays attention to a device including a display device, the transmission control unit displays the information on the display device.

5. The information processing device according to claim 1,
wherein the transmission control unit transmits the information to the user after executing processing of attracting attention of the user to the different device.

6. The information processing device according to claim 1,
wherein the transmission control unit displays, on a device including a display device, a message to attract attention to the different device and transmits the information to the user after the user pays attention to the different device as a result thereof.

7. The information processing device according to claim 1,
wherein the different device includes a plurality of instruments,
the detection unit detects whether or not the user pays attention to the instruments, and
the transmission control unit transmits the information by the instruments.

8. The information processing device according to claim 1,
wherein the different device includes a plurality of instruments,
the detection unit detects whether or not the user pays attention to a display device that displays the instruments, and
the transmission control unit displays, on the display device, the instruments that output information.

9. An information processing method comprising the steps of:
acquiring information from a different device;
detecting whether or not a user pays attention to the different device; and
transmitting the information to the user when it is detected that the user pays attention to the different device.

10. A program for causing a computer to execute processing including the steps of:
acquiring information from a different device;
detecting whether or not a user pays attention to the different device; and
transmitting the information to the user when it is detected that the user pays attention to the different device.
